# EUROPEAN PATENT SPECIFICATION

(11) **EP 0 742 628 B1**
(45) Date of publication and mention of the grant of the patent: **13.09.2000**
(21) Application number: 96610019.0
(22) Date of filing: 08.05.1996
(51) Int. Cl.: H02G 15/068, H02G 15/184

(54) **A method of preparing a cable end as well as a sleeve for a high voltage cable**
Verfahren zum Bereitstellen eines Kabelendes sowie Muffe für Hochspannungskabel
Procédé de préparation d'une extrémité de câble ainsi que manchon pour câble à haute tension

(30) Priority: 08.05.1995 NO 951782
(43) Date of publication of application: 13.11.1996
(73) Proprietor: NKT Cables A/S, 2605 Bröndby (DK)
(72) Inventor: Nielsen, Ole Kjaer, 4600 Koge (DK)
(74) Representative: Wittrup, Flemming

(56) References cited:
- EP-A- 0 115 322
- WO-A-92/08265
- DE-A- 1 918 451
- DE-A- 4 009 243
- DE-B- 1 690 059
- JP-A- 57 186 913
- US-A- 3 080 447
- US-A- 3 258 522

## Description

The invention concerns a method of preparing a cable end of a high voltage cable for joining with a cable terminal or another corresponding cable end. The method concerns high voltage cables of the type comprising an insulation material whose outer layer is provided with a semi-conducting layer, said method comprising stripping the semi-conducting layer on a portion of the cable length.

The invention also concerns a sleeve for such a cable.

High voltage cables of this type typically consist of a conductor, an inner semi-conducting layer, an insulation layer, and outer semi-conducting layer, a metal screen and outermost a plastics jacket. The semi-conducting layers at the conductor and the insulation surface, respectively, must have very smooth boundary faces for the insulation and serve to ensure a distribution of the electric field as even as possible, since an uneven field distribution involves a risk of breakdown in the cable insulation. It has been found in practice that a predominant part of the breakdowns occurring in such high voltage cables takes place where the outer semi-conducting layer of the cable is stripped and terminated when joining a cable end with a cable terminal, or where it is spliced to another corresponding cable end to extend the cable.

In connection with the joining with a cable terminal, the termination of the outer semi-conducting layer usually takes place in that said layer is stripped from the outermost portion of the cable insulation, which is thus exposed on this portion. Then, a so-called stress cone is inserted over the cable end. This cone also comprises a semi-conducting layer, which is hereby caused to contact the semi-conducting layer on the cable. The stress cone concerned is constructed such that the semi-conducting layer in a direction toward the cable end move away from the cable axis, whereby the field distribution is controlled expediently. This is well-known and described in the literature. The mentioned stress cone may be of an elastomeric material and has an opening with a diameter adapted so as to fit snugly around the cable end, thereby ensuring physical contact between its semi-conducting layer and the semi-conducting layer on the cable and the cable insulation. Where a cable end is to be joined with another corresponding cable end by splicing, the principle is the same, except that a sleeve member likewise of elastomeric material is used, having at both ends a stress cone shape with semi-conducting layers which are caused to contact the semi-conducting layer on the cable ends.

When, as mentioned, the semi-conducting layer is stripped from the outermost portion of the cable insulation, it is difficult to achieve a smooth insulation surface and a well-defined boundary between the cable area where the semi-conducting layer has been stripped, and the area where the semi-conducting layer remains on the cable insulation. Irregularities in this boundary and in the surface of the insulation may cause local increases in the electric field to a size exceeding the one permitted for the cable insulation when cables for very high voltages are involved.

EP 0 510 453 discloses a principle which serves to remedy this problem. Here, each cable length is manufactured at the factory in such a manner that the diameter of the insulation layer is increased at the ends of the cable. As the field strength of the electric field in the insulation decreases through the insulation layer and moreover diminishes when the ratio of insulation diameter to conductor diameter increases, this increase in insulation diameter means that the field strengths will be reduced at the cable ends, thereby reducing the risk of breakdown. Further, the cable termination is effected as stated above, but using a stress cone of larger diameter than is otherwise the case. However, a considerable drawback of this principle is that the expansion of the insulation layer is produced already in the manufacture of the cable at the factory, since the principle can then just be used if the factory-manufactured cable lengths exactly fit the cable joint to be established. Where errors occur in connection with a cable splicing or cable termination, it is thus not possible just to cut off a portion of the cable and make a new joint, but the entire cable length concerned has to be scrapped, as the portion of the cable end of increased diameter will have to be cut off. Further, the principle does not remove the problem proper, it is just diminished because of the lower field strength produced by the increase in diameter.

Danish Patent Application No. 3389/86 discloses a cable joint of slightly different type, where it is attempted to remedy the problem of defining the semi-conducting layer on the cable insulation. After having stripped a suitable length of the insulation, as described before, a ring of semi-conducting paint is applied so as to overlap the semi-conducting layer of the cable, and to ensure that there are no sharp edges in the semi-conductor boundary. However, this process has been found to be very difficult to control in practice, as even small impurities in the paint or irregularities in the insulation covered by the paint will give rise to the above-mentioned local field intensification that may cause breakdown in the cable insulation. Further, it is very difficult to apply the paint so that the boundary will be sufficiently well-defined.

Japanese patent application JP 57 186913 A discloses a termination assembly for a power cable having polyethylene insulation with an outer semiconducting layer. The semiconducting layer is stripped from an end portion of the cable and a layer of electrically conductive paint is applied by spraying so as to overlap the end of the semiconducting layer and extend some way along the exposed insulation. The conductive paint layer is covered by a layer of semiconducting tape and a stress cone having a bell mouth facing away from the end of the cable is pushed over the exposed insulation. In order to arrange a well-defined separation ℓ between the end of the conductive paint layer and the beginning of the bell curve, two bands of vinyl tape are applied to mask the cable before spraying, to mark the ends of the conductive layer, and are removed when spraying is completed. The bell curve of the stress cone is then covered by a semiconducting connecting part, which extends to overlap the conducting layer and the layer of semiconducting tape. It appears that the removal of the vinyl tape after spraying may lead to irregularities in the boundary of the conductive paint.

Accordingly, the object of the invention is to provide a method comprising producing a cable end where the semi-conducting layer on the insulation layer may be terminated in a sufficiently precise and well-defined manner and the insulation layer surface will be without irregularities, thereby obviating local field intensifications and eliminating or minimizing the risk of breakdown in this area. The method moreover ensures that it is easier to apply a stress cone or sleeve body, since it is possible to use a stress cone or sleeve body of a slightly larger internal diameter than the cable end itself, while obtaining an optimum termination or joint of the cable.

This is achieved according to the invention by applying, after the stripping of the semi-conducting layer on a portion of the cable length, a second semi-conducting layer which overlaps the first semi-conducting layer, and which has a well-defined termination in a direction toward the cable end. This well-defined termination is produced by first applying to a portion of the exposed length of the cable insulation surface a thickening of an insulating material which has a well-defined surface and termination in a direction toward the first semi-conducting layer and a well-defined surface and a continuous increase in the insulation thickness to full thickening in a direction toward the cable end. The said semi-conducting layer is then applied so as to extend to the well-defined termination of the thickening in a direction toward the cable end.

It is hereby ensured that the termination of the semi-conducting layer will be sharp and well-defined, as it adjoins said thickening of the insulation. Further, a smooth boundary face to the second semi-conducting layer is achieved, and the thickening of the insulation moreover ensures that the field strength diminishes, as described above. The combination of these features has been found to make it possible to produce cable terminations and cable splicings where the number of breakdowns in connection with the termination of the outer semi-conducting layer of the cable may be reduced considerably.

Where the cable insulation fully or partly consists of cross-linked polymer-electric insulating material, it is expedient to produce said thickening by winding the cable insulation with a tape of a corresponding polymer-electric material and then vulcanizing the thickening with the existing insulation. As the existing insulation and the applied thickening thus consist of the same material after the vulcanization, a more even field distribution in the cable and the same thermal conditions are achieved. Furthermore, such a boundary face between two uniform materials can withstand a field strength stress which is several times greater than for a boundary face between two different materials not vulcanized together, e.g. the boundary face between a stress cone and the cable insulation.

The use of a sleeve dummy, shaped so as to be capable of being pressed down into the polymer-electric material during the vulcanization to define the surface of the thickening and the desired termination profile, results in a very simple method, since this sleeve dummy just has to be shaped in advance so as to correspond to the boundary face which is to be produced between the thickening and the second semi-conducting layer.

Further, when the second semi-conducting layer is produced by winding a semi-conductor tape at the location where the sleeve dummy was previously present, and then the applied semi-conductor is vulcanized with the insulation material, including the thickening, and the existing semi-conductor of the cable, then the semi-conducting layer will be very homogeneous without impurities, which additionally diminishes the risk of flashover at this location.

The invention also provides a sleeve constructed according to this method, which is thus characterized in that it comprises a thickening of insulation material on a part of the portion of the cable length where the first semi-conducting layer is stripped. Moreover, it comprises a second semi-conducting layer which overlaps the first semi-conducting layer, and which, in a direction toward said thickening, extends to a well-defined termination determined by said thickening.

The sleeve may comprise a continuous increase in the insulation thickness to full thickening with a smooth and well-defined surface.

When at least a portion of the boundary face between the second semi-conducting layer and said thickening extends radially with respect to the longitudinal axis of the cable, said well-defined termination may be optimized by subsequent mechanical working of the transitional area between the second semi-conducting layer and the thickening of the insulation material.

The invention will now be explained more fully below with reference to the drawing, in which
fig. 1 shows a cable termination with a stress cone according to the prior art,
fig. 2 shows a splicing of two cable ends with a sleeve body according to the prior art,
fig. 3 shows a portion of a cable end with a semi-conducting layer,
fig. 4 shows the cable end of fig. 3 after the stripping of the semi-conducting layer on a portion of the cable,
fig. 5 shows the application of a thickening and a sleeve dummy on the cable end of fig. 4,
fig. 6 shows the cable end of fig. 5 after the stripping of the sleeve dummy,
fig. 7 shows the cable end after application of a second semi-conducting layer,
fig. 8 shows the cable end of fig. 7 after vulcanization,
fig. 9 shows the application of a stress cone on the cable end of fig. 7,
fig. 10 shows a joint of two cable ends with a sleeve body,
fig. 11 shows a corresponding joint with polymeric material, and
fig. 12 shows a joint where the semi-conducting layer is interrupted.

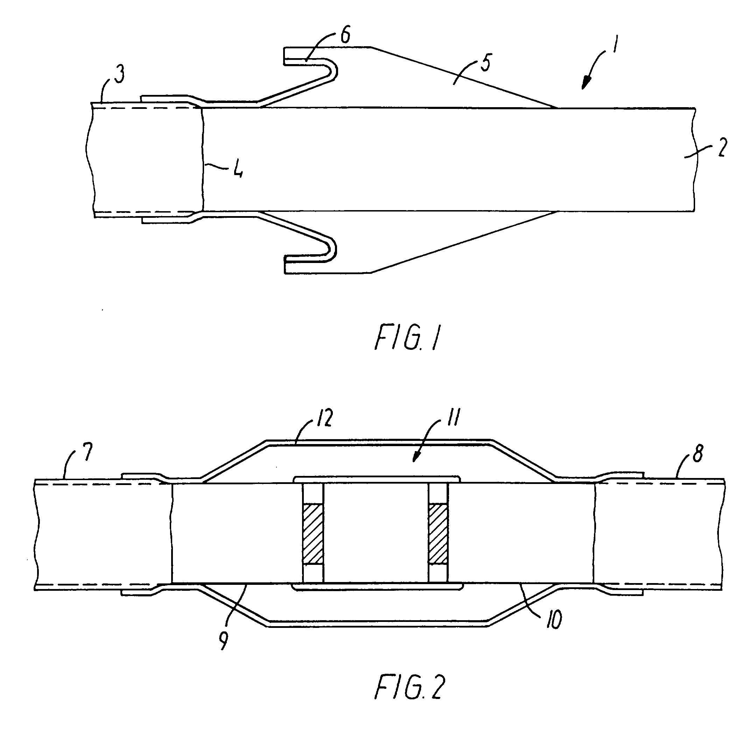

Fig. 1 shows a cable end 1 which is terminated according to the prior art. The surface of the cable insulation 2 is provided with a semi-conducting layer 3 stripped on the outer portion of the cable so that the insulation 2 of this portion is exposed. The exposed area extends from the cable end to a semi-conductor boundary 4. The stripping of the semi-conducting layer on the outer portion usually takes place by mechanical working, which makes it difficult to obtain an even surface on the cable insulation 2 and a precise and well-defined boundary 4. A so-called stress cone 5 comprising a semi-conducting layer 6 is provided on the outer end of the cable. The stress cone 5 is shaped so as to fit snugly around the cable end, and so that the semi-conducting layer 6 extends up to and overlaps the semi-conducting layer 3 on the cable. The boundary 4 is here covered by the semi-conducting layer 6, which thus constitutes a continuation and termination of the semi-conducting layer 3. As will be seen in the figure, the semi-conducting layer 6 is shaped so as to move away from the cable axis in a direction toward the cable end, whereby the field distribution is controlled in an expedient manner.

Fig. 2 similarly shows an example where two cable ends, likewise according to the prior art, are joined with each other by splicing. Here, too, the semi-conducting layers 7, 8 are stripped from the outer portions of the two cable ends, thereby exposing the cable insulation 9, 10 in the same manner as in fig. 1. Here, a sleeve body 11 is used instead of a stress cone, which sleeve body covers the two cable ends, and which is likewise provided with a semi-conducting layer 12 joining the two semi-conducting layers 7, 8. The sleeve body 11 is shaped at both ends in such a manner that the semi-conducting layer 12, in the same manner as with the stress cone of fig. 1, moves away from the cable axis in a direction toward the splice owing to the distribution of the electric field.

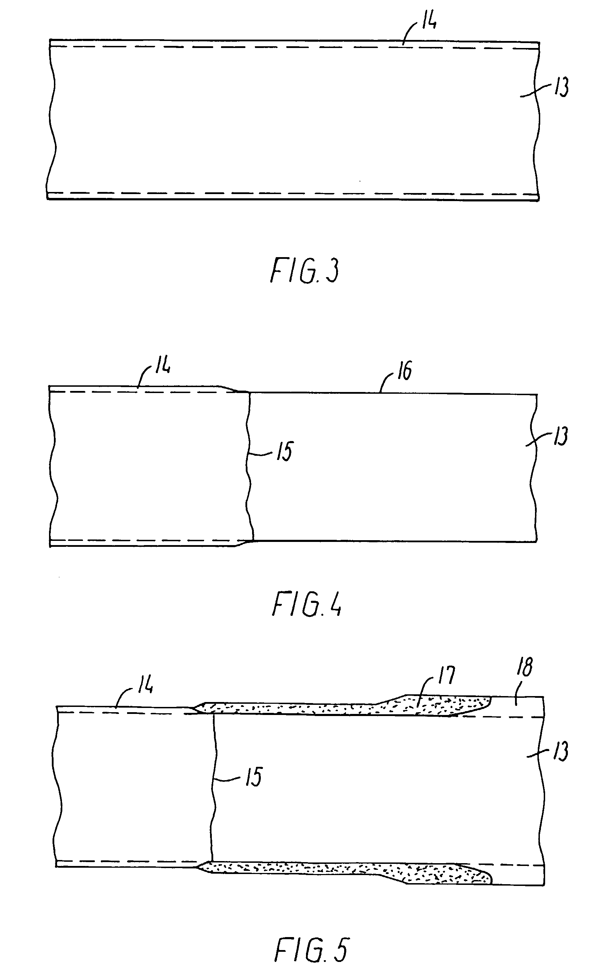

Figs. 3-7 show how a cable end is prepared according to the invention for joining with a cable terminal or another corresponding cable end. Fig. 3 shows a portion of a cable where the surface of the insulation material 13 is provided with a semi-conducting layer 14. In fig. 4, the semi-conducting layer 14 is stripped on the outer part of the cable end to provide a boundary 15 between the semi-conducting layer 14 and the area 16 in which the insulation surface is exposed. In most cases, the insulation material is a cross-linked polymer-electric insulating material. The matter illustrated in figs. 3 and 4 corresponds completely to the method which is used in the prior art.

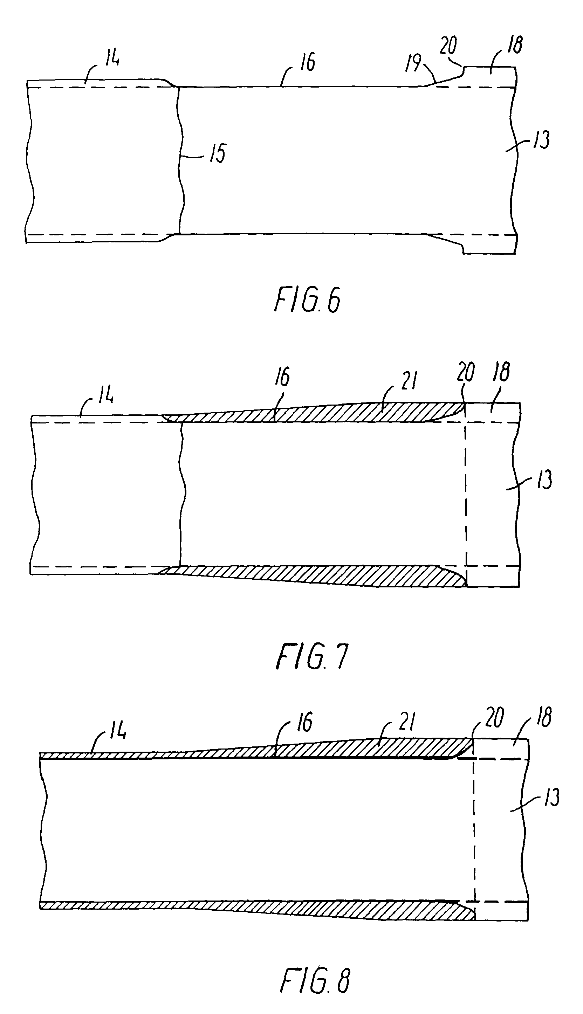

Then, according to the invention, a thickening of the insulating material is applied. This takes place e.g. by winding the exposed insulation material with a tape of a polymer-electric material, which corresponds to the material of which the cable insulation consists. The wound material may then be vulcanized together with the existing insulation material of the cable, and in connection with this vulcanization a sleeve dummy 17 is pressed down in the thickening, thereby shaping it as defined by the sleeve dummy 17. Fig. 5 shows how the thickening 18 hereby receives a shape which is defined by the sleeve dummy 17. After the vulcanization, the sleeve dummy 17 is removed again, and the cable end now has the appearance shown in fig. 6. It is noted here in particular that the transition face 19 between the stripped section 16 and the thickening 18 has a gradually increasing diameter in a direction toward the cable end. This increase in insulation thickness is well-defined and continuous, and the face extends approximately in a radial direction in the area where the full thickening is achieved, to provide a sharp and well-defined edge 20 at the transition to the full diameter.

It should moreover be noted that the exposed insulated section 16 and the transition to the semi-conducting layer 14 obtain an even and smooth surface which is defined by the sleeve dummy 17.

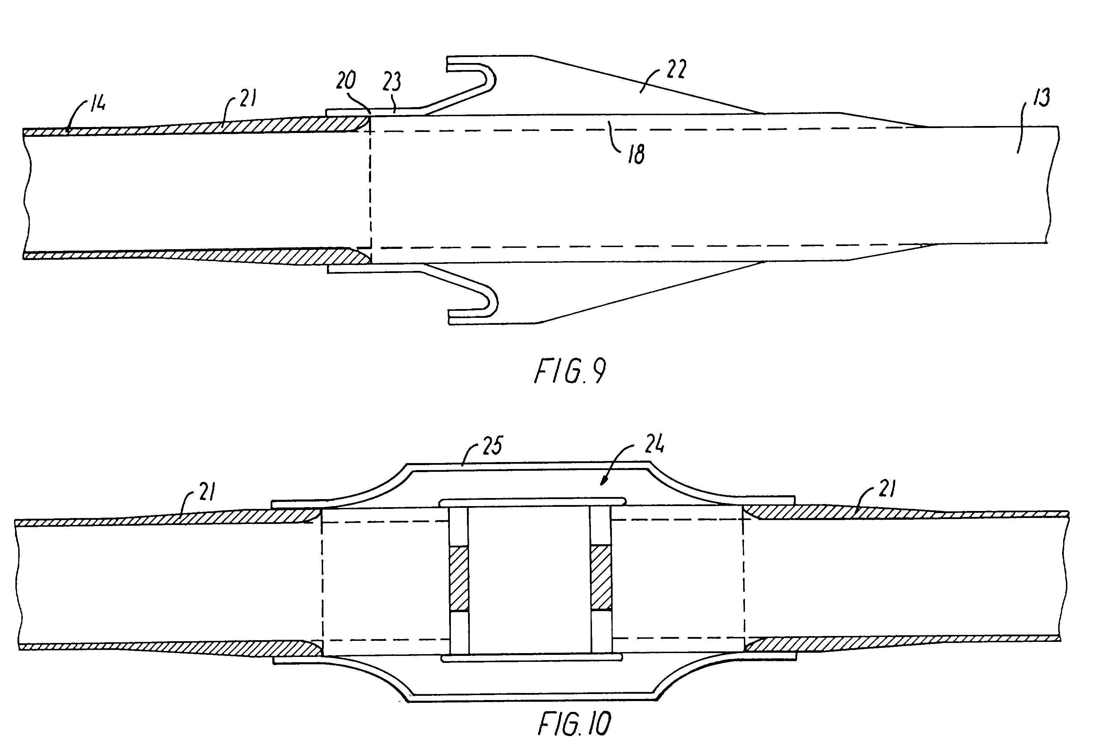

Then, the area 16 is wound with a semi-conductor tape. This area corresponds to the area where the sleeve dummy 17 was previously present. The semi-conductor tape is wound in such a manner as to partly overlap the existing semi-conducting layer 14 and partly reach at least the well-defined edge 20 of the thickening 18. This is shown in fig. 7. The wound semi-conductor tape may then be vulcanized with the insulation material, including the existing semi-conductor 14 and the thickening 18. This results in a very homogeneous semi-conducting layer, and a transition without irregularities to the existing semi-conductor layer 14, and a smooth boundary face to the insulation surface 16 and the thickening 18. In the direction toward the cable end, the shape of the semi-conducting layer 21 is determined by the transition face 19 well-defined in advance and the sharp boundary edge 20 to the thickening 18. This ensures that the termination of the semi-conducting layer will be completely sharp and well-defined, thereby minimizing the risk of breakdown at this location. This is shown in fig. 8.

The further working of the cable end may then take place in the same manner as described for the prior art in connection with figs. 1 and 2. It is thus shown in fig. 9 how a stress cone 22 corresponding to the cone 5 in fig. 1 may be mounted on the cable end. The stress cone now used is one intended for a cable of a slightly larger diameter corresponding to the thickening 18. The stress cone 22 is mounted so that its semi-conducting layer 23 now overlaps and contacts the semi-conducting layer 21. According to the method, the problems of defining the semi-conductor layer on the cable itself and irregularities in the insulation are thus eliminated.

Fig. 10 correspondingly shows a situation where the cable end is joined with another corresponding cable end by splicing. After the splicing, a sleeve body 24 of an insulation material having the same function as the stress cone 22 in fig. 9, is applied to the joint. Correspondingly, the sleeve body has a semi-conducting layer 25 which contacts the semi-conducting layers 21 of the two cable ends produced according to the invention, whereby the semi-conducting layer is moved past the joint with the least possible risk of breakdown at this location. Fig. 9 and fig. 10 are based on the use of stress cone and sleeve body, respectively, of e.g. an elastomeric material in connection with the semi-conducting layer produced according to the invention.

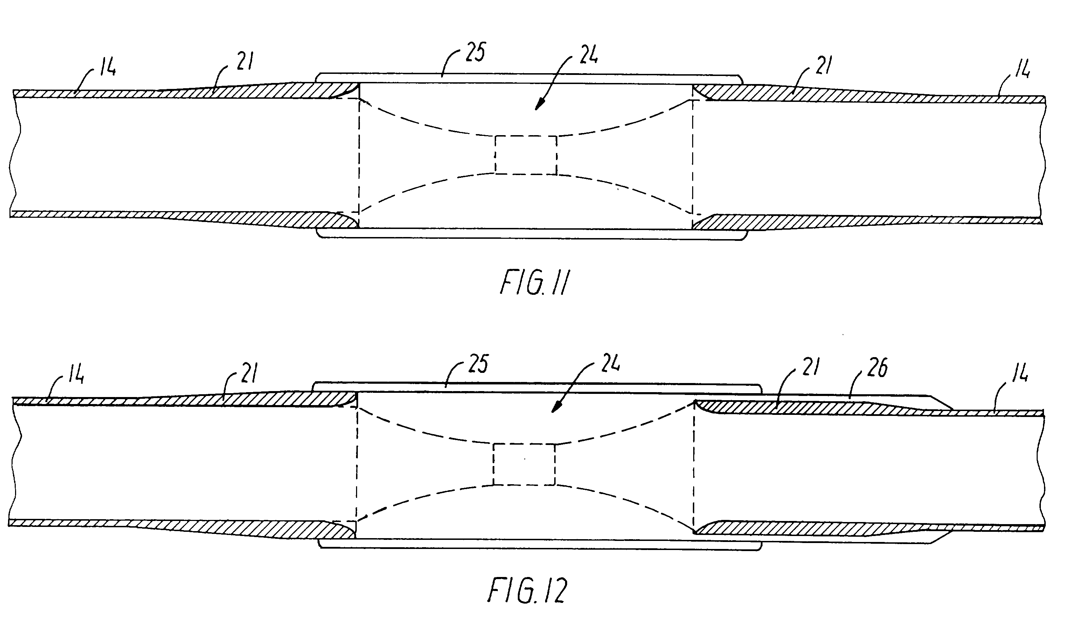

It may also be expedient to apply the invention to cable joints where the sleeve insulation is made of e.g. a polymeric material corresponding to the material of which the cable insulation consists. In this case, the joint may be provided as shown in fig. 11, where the polymeric insulation material 24 is provided with a semi-conducting layer 25, which is vulcanized with the polymeric material 24 and the semi-conducting layer 21 produced according to the invention.

In certain types of cable joints it is necessary to interrupt the semi-conducting layer. In this case, the joint may be effected as shown in fig. 12, whose left half is identical with fig. 11. In the right half of fig. 12, an insulation layer 26 is instead applied on the semi-conducting layer 21, so that the semi-conducting layer 25 does not contact the semi-conducting layer 21 or the existing semi-conducting layer 14.

The foregoing illustrates an example of how a cable termination may be provided according to the invention, and it will be appreciated that details may be modified in a number of aspects within the scope of the invention, which is defined by the appended claims. Thus, the well-defined termination of the semi-conducting layer may e.g. be produced in other ways than by means of the said sleeve dummy, and also other materials than those described may be used.

## Claims

1. A method of preparing a cable end of a high voltage cable, which comprises an insulation material (13) whose outer side has a first semi-conducting layer (14), for joining with a cable terminal or another corresponding cable end, said method comprising stripping the first semi-conducting layer (14) on a portion (16) of the cable length, **characterized** by applying, after said stripping, a second semi-conducting layer (21) which overlaps the first semi-conducting layer (14), and which has a well-defined termination (20) in a direction toward the cable end, and that said well-defined termination is produced by first applying to a portion of the exposed length (16) of the insulation material a thickening (18) of an insulating material having a well-defined termination in a direction toward the first semi-conducting layer (14), and then applying the second semi-conducting layer (21) so that it extends to the well-defined termination (20) of the thickening in a direction toward the cable end.

2. A method according to claim 1, wherein the cable insulation comprises a cross-linked polymer-electric insulation material, **characterized** by producing said thickening (18) by winding the cable insulation with tape of a corresponding polymer-electric material, and then vulcanizing the thickening with the existing insulation.

3. A method according to claim 2, **characterized** by producing the well-defined termination (20) of the thickening by mounting a sleeve dummy (17) prior to the vulcanization, said sleeve dummy being shaped so that it is pressed down into the polymer-electric material during the vulcanization to define the desired termination profile (19) of the thickening and a smooth surface on the section corresponding to the length of the sleeve dummy, and which is removed again after the vulcanization.

4. A method according to claims 1-3, **characterized** by producing the second semi-conducting layer (21) by winding semi-conductor tape thereon, which is subsequently vulcanized with the insulation material and the existing semi-conductor (14) of the cable.

5. A sleeve for a high voltage cable, which comprises an insulation material whose outer side is provided with a first semi-conducting layer (14), which is stripped on a portion (16) of the cable length, **characterized** in that it comprises a thickening (18) of an insulation material on a part of the portion of the cable length where the first semi-conducting layer (14) is stripped, and a second semi-conducting layer (21) which overlaps the first semi-conducting layer (14), and which, in a direction toward the thickening, extends to a well-defined termination (20) determined by said thickening.

6. A sleeve according to claim 5, **characterized** in that at least a portion of the boundary face (19) between the second semi-conducting layer (21) and said thickening (18) extends radially with respect to the longitudinal axis of the cable.

## Patentansprüche

1. Verfahren zum Vorbereiten eines Kabelendes eines Hochspannungskabels, das ein Isolationsmaterial (13) umfasst, dessen Außenseite eine erste halbleitende Schicht (14) aufweist, für eine Verbindung mit einer Kabelabschlusseinrichtung oder einem anderen entsprechenden Kabelende, wobei das Verfahren ein Entfernen der ersten halbleitenden Schicht (14) auf einem Teilstück (16) der Kabellänge umfasst, dadurch gekennzeichnet, dass nach dem Entfernen eine zweite halbleitende Schicht (21) aufgebracht wird, die die erste halbleitende Schicht (14) überlappt und die zum Kabelende hin einen wohldefinierten Abschluss (20) aufweist, und dass der wohldefinierte Abschluss erzeugt wird, indem man zuerst auf einem Teilstück der freiliegenden Länge (16) des Isolationsmaterials eine Verdickung (18) aus einem Isolationsmaterial mit einem wohldefinierten Abschluss zur ersten halbleitenden Schicht (14) hin aufbringt und dann die zweite halbleitende Schicht (21) aufbringt, so dass sie sich zum Kabelende hin bis zum wohldefinierten Abschluss (20) der Verdickung erstreckt.

2. Verfahren nach Anspruch 1, bei dem die Kabelisolation ein elektrisch isolierendes Material aus vernetztem Polymer umfasst, dadurch gekennzeichnet, dass die Verdickung (18) erzeugt wird, indem die Kabelisolation mit einem Band aus einem entsprechenden Polymerelektromaterial umwickelt wird und dann die Verdickung mit der vorhandenen Isolation vulkanisiert wird.

3. Verfahren nach Anspruch 2, dadurch gekennzeichnet, dass der wohldefinierte Abschluss (20) der Verdickung erzeugt wird, indem vor der Vulkanisation ein Muffendummy (17) aufgebracht wird, wobei der Muffendummy so geformt ist, dass er während der Vulkanisation in das Polymerelektromaterial hinabgepresst wird, um das gewünschte Abschlussprofil (19) der Verdickung und eine glatte Oberfläche auf dem der Länge des Muffendummys entsprechenden Abschnitt zu definieren, und der nach der Vulkanisation wieder entfernt wird.

4. Verfahren nach den Ansprüchen 1-3, dadurch gekennzeichnet, dass die zweite halbleitende Schicht (21) erzeugt wird, indem ein Halbleiterband darauf gewickelt wird, das anschließend mit dem Isolationsmaterial und dem vorhandenen Halbleiter (14) auf dem Kabel vulkanisiert wird.

5. Muffe für ein Hochspannungskabel, das ein Isolationsmaterial umfasst, dessen Außenseite mit einer ersten halbleitenden Schicht (14) versehen ist, die auf einem Teilstück (16) der Kabellänge entfernt ist, dadurch gekennzeichnet, dass sie umfasst: eine Verdickung (18) aus einem Isolationsmaterial auf einem Teil des Teilstücks der Kabellänge, wo die erste halbleitende Schicht (14) entfernt ist, und eine zweite halbleitende Schicht (21), die die erste halbleitende Schicht (14) überlappt und die sich zur Verdickung hin bis zu einem wohldefinierten Abschluss (20) erstreckt, der durch die Verdickung festgelegt ist.

6. Muffe nach Anspruch 5, dadurch gekennzeichnet, dass mindestens ein Teilstück der Grenzfläche (19) zwischen der zweiten halbleitenden Schicht (21) und der Verdickung (18) bezüglich der Längsachse des Kabels radial verläuft.

## Revendications

1. Procédé de préparation d'une extrémité d'un câble à haute tension qui comporte un matériau isolant (13) dont la face extérieure présente une première couche semiconductrice (14) pour jonction avec une borne de câble ou une autre extrémité de câble correspondante, ledit procédé comprenant le fait d'éliminer la première couche semiconductrice (14) sur une portion (16) de la longueur du câble, caractérisé par le fait d'appliquer, après ladite élimination, une seconde couche semiconductrice (21) qui recouvre en bordure la première couche semiconductrice (14) et qui présente une limite de raccordement bien définie (20) en direction de l'extrémité du câble, et par le fait que l'on produit ladite limite de raccordement bien définie en appliquant d'abord à une portion de la longueur exposée (16) du matériau isolant, une surépaisseur (18) d'un matériau isolant présentant une limite de raccordement bien définie en direction de la première couche semiconductrice (14), puis en appliquant la seconde couche semiconductrice (21) de façon qu'elle s'étende jusqu'à la limite de raccordement bien définie (20) de la surépaisseur en direction de l'extrémité du câble.

2. Procédé selon la revendication 1, dans lequel l'isolement du câble comporte un matériau polymère réticulé électriquement isolant, caractérisé, par le fait que l'on produit ladite surépaisseur (18) en enroulant sur l'isolement du câble un ruban d'un matériau polymère électriquement isolant correspondant puis en vulcanisant la surépaisseur en même temps que l'isolement existant.

3. Procédé selon la revendication 2, caractérisé par le fait que l'on produit la ligne de raccordement bien définie (20) de la surépaisseur en montant un manchon factice (17) avant la vulcanisation, ledit manchon factice ayant une forme telle qu'il est pressé, vers le bas, dans le matériau polymère électriquement isolant au cours de la vulcanisation pour définir le profil désiré (19) de la limite de raccordement de la surépaisseur ainsi qu'une surface lisse sur la portion correspondant à la longueur du manchon factice, manchon que l'on enlève après vulcanisation.

4. Procédé selon la revendication 1-3, caractérisé par le fait que l'on produit la seconde couche semiconductrice (1) en enroulant sur elle un ruban semiconducteur que l'on vulcanise ensuite en même temps que le matériau isolant et que la couche semiconductrice existante (14) du câble.

5. Manchon pour un câble à haute tension, qui comporte un matériau isolant dont la face extérieure présente une première couche semiconductrice (14) qui a été éliminée sur une portion (16) de la longueur du câble, caractérisé par le fait qu'il comporte une surépaisseur (18) d'un matériau isolant sur une partie de la portion de la longueur du câble où la première couche semiconductrice (14) a été éliminée, ainsi qu'une seconde couche semiconductrice (21) qui recouvre en bordure la première couche semiconductrice (14) et qui, en direction de la surépaisseur, s'étend jusqu'à une limite de raccordement bien définie (20) déterminée par ladite surépaisseur.

6. Manchon selon la revendication 5, caractérisé par le fait qu'au moins une portion de la face (19) limite entre la seconde couche semiconductrice (21) et ladite surépaisseur (18) s'étend radialement par rapport à l'axe longitudinal du câble.
